# EUROPEAN PATENT APPLICATION

(11) **EP 4 498 348 A1**
(43) Date of publication of application: **29.01.2025**
(21) Application number: 22933293.7
(22) Date of filing: 23.03.2022
(51) Int. Cl.: G08G 5/00

(54) **FLYING ASSISTANCE SYSTEM, FLYING ASSISTANCE DEVICE, AND FLYING ASSISTANCE METHOD**

(71) Applicant: MITSUBISHI ELECTRIC CORPORATION, Chiyoda-ku Tokyo 100-8310 (JP)
(72) Inventor: OZAWA Hideyuki, Tokyo 100-8310 (JP); NOBUE Kazuki, Tokyo 100-8310 (JP); IMAKI Masaharu, Tokyo 100-8310 (JP)
(74) Representative: Mewburn Ellis LLP
(86) International application number: PCT/JP2022/013366
(87) International publication number: WO 2023/181147

(57) **Abstract**

A flying assistance system includes: a wind state collection unit configured to analyze future wind states on the basis of wind states collected by a wind state detection device and generate wind state information including time information, position information, and future wind states corresponding to the position information; a flight route storage unit configured to store route information in which departure point information, arrival point information, and a preset flight route are associated; and an optimization processing unit configured to optimize a flight plan of a flying object on the basis of flight information including the arrival point information, the wind state information, and the route information stored in the flight route storage unit. The optimization processing unit decides a flight order pattern indicating a flight order for traveling in a circuit to the location of the arrival point corresponding to the flight information on the basis of the wind state information and the route information and changes the flight start time of the flight order pattern to optimize the flight plan including the start time and the flight order pattern according to an optimization index based on the flight order pattern, the wind state information, and the route information.

## Description

### [Technical Field]

The present disclosure relates to a flight assistance system, a flight assistance device, and a flight assistance method.

### [Background Art]

In recent years, attempts have been made to utilize flying objects such as drones for various services. It is necessary to perform a safe and efficient flight operation so that flying objects are utilized for services and a technique for generating an optimal flight route is known (see, for example, Patent Document 1).

### [Prior Art Documents]

### [Patent Document]

[Patent Document 1] International Publication No. 2018/123062

### [Summary of the Invention]

### [Problems to be Solved by the Invention]

However, in the above-described conventional technique, an optimal flight route is generated in consideration of current environmental information. Therefore, in the above-described conventional technique, for example, it is difficult to generate an optimal flight plan corresponding to a change in wind states including the elapse of time, in the flight operation of the flying object.

The present disclosure has been made to solve the above-described problems and an objective of the present disclosure is to provide a flight assistance system, a flight assistance device, and a flight assistance method capable of providing an optimal flight plan in a flight operation of a flying object.

### [Means for Solving the Problems]

In order to solve the above-described problems, according to an aspect of the present disclosure, there is provided a flight assistance system including: a wind state collection unit configured to collect wind states including a wind direction and a wind speed detected by a wind state detection device, analyze future wind states on the basis of at least one of the collected wind states and weather information, and generate wind state information including time information, position information, and future wind states corresponding to the position information; a flight route storage unit configured to store route information in which departure point information indicating a location of a departure point, arrival point information indicating a location of an arrival point, and a flight route preset when a flying object flies from the location of the departure point to the location of the arrival point are associated; and an optimization processing unit configured to optimize a flight plan of the flying object on the basis of flight information including the arrival point information, the wind state information generated by the wind state collection unit, and the route information stored in the flight route storage unit, wherein the optimization processing unit decides a flight order pattern indicating a flight order for traveling in a circuit to the location of the arrival point corresponding to the flight information on the basis of the wind state information and the route information, and changes a flight start time of the flight order pattern to optimize the flight plan including the start time and the flight order pattern according to an optimization index based on the flight order pattern, the wind state information, and the route information.

Moreover, according to an aspect of the present disclosure, there is provided a flight assistance device including: a flight route storage unit configured to store route information in which departure point information indicating a location of a departure point, arrival point information indicating a location of an arrival point, and a flight route preset when a flying object flies from the location of the departure point to the location of the arrival point are associated; and an optimization processing unit configured to optimize a flight plan of the flying object on the basis of flight information including the arrival point information, wind state information including future wind states analyzed on the basis of at least one of wind states including a wind direction and a wind speed detected by a wind state detection device and weather information, time information, and position information, and the route information stored in the flight route storage unit, wherein the optimization processing unit decides a flight order pattern indicating a flight order for traveling in a circuit to the location of the arrival point corresponding to the flight information on the basis of the wind state information and the route information, and changes a flight start time of the flight order pattern to optimize the flight plan including the start time and the flight order pattern according to an optimization index based on the flight order pattern, the wind state information, and the route information.

Moreover, according to an aspect of the present disclosure, there is provided a flight assistance method of a flight assistance system including a flight route storage unit configured to store route information in which departure point information indicating a location of a departure point, arrival point information indicating a location of an arrival point, and a flight route preset when a flying object flies from the location of the departure point to the location of the arrival point are associated, the flight assistance method including: collecting, by a wind state collection unit, wind states including a wind direction and a wind speed detected by a wind state detection device, analyzing future wind states on the basis of at least one of the collected wind states and weather information, and generating wind state information including time information, position information, and future wind states corresponding to the position information; and executing, by an optimization processing unit, an optimization process of optimizing a flight plan of the flying object on the basis of flight information including the arrival point information, the wind state information generated by the wind state collection unit, and the route information stored in the flight route storage unit, wherein, in the optimization process, the optimization processing unit decides a flight order pattern indicating a flight order for traveling in a circuit to the location of the arrival point corresponding to the flight information on the basis of the wind state information and the route information, and changes a flight start time of the flight order pattern to optimize the flight plan including the start time and the flight order pattern according to an optimization index based on the flight order pattern, the wind state information, and the route information.

### [Effects of the Invention]

According to the present disclosure, an optimal flight plan can be provided in a flight operation of a flying object.

### [Brief Description of the Drawings]

FIG. 1 is a diagram showing an example of a configuration of main hardware of a flight assistance system according to the present embodiment.
FIG. 2 is a block diagram showing an example of a functional configuration of the flight assistance system according to the present embodiment.
FIG. 3 is a diagram showing an example of wind state information in the present embodiment.
FIG. 4 is a diagram showing an example of data of a flight information storage unit in the present embodiment.
FIG. 5 is a diagram showing an example of data of a flight route storage unit in the present embodiment.
FIG. 6 is a diagram showing an example of data of a flight order storage unit in the present embodiment.
FIG. 7 is a diagram showing an example of data of a flight plan storage unit in the present embodiment.
FIG. 8 is a first diagram showing an example of a flight order pattern in the present embodiment.
FIG. 9 is a second diagram showing an example of a flight order pattern in the present embodiment.
FIG. 10 is a first diagram showing an example of optimization in which time information has been changed in the present embodiment.
FIG. 11 is a second diagram showing an example of optimization in which time information has been changed in the present embodiment.
FIG. 12 is a first diagram showing an example of a flight image of a drone in which time information has been changed in the present embodiment.
FIG. 13 is a first diagram showing an example of a flight image of a drone in which time information has been changed in the present embodiment.
FIG. 14 is a diagram showing an example of an analysis process in which time information has been changed in the present embodiment.
FIG. 15 is a flowchart showing an example of an optimization process of the flight assistance system in the present embodiment.
FIG. 16 is a flowchart showing an example of an analysis process of the flight assistance system in the present embodiment.

### [Mode for Carrying Out the Invention]

Hereinafter, a flight assistance system, a flight assistance device, and a flight assistance method according to an embodiment of the present disclosure will be described with reference to the drawings.

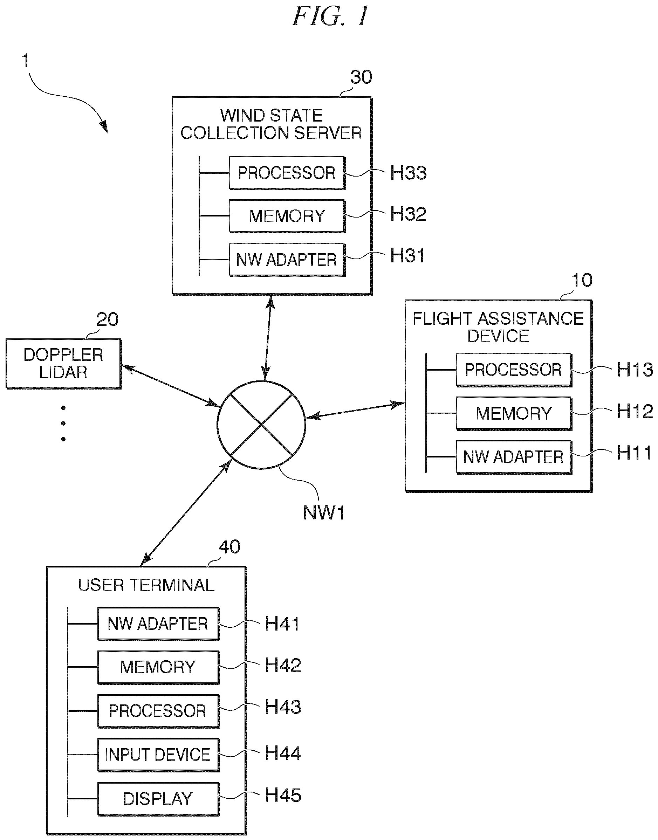

FIG. 1 is a diagram showing an example of a configuration of main hardware of a flight assistance system 1 according to the present embodiment.

As shown in FIG. 1, the flight assistance system 1 includes a flight assistance device 10, a Doppler lidar 20, a wind state collection server 30, and a user terminal (including an application programming interface (API)) 40.

The Doppler lidar 20 radiates a laser to space and detects wind states including a wind direction and a wind speed using a Doppler effect. The Doppler lidar 20 is an example of a wind state detection device.

The Doppler lidar 20 can be connected to, for example, a network NW1, and transmits the detected wind states to the wind state collection server 30 via the network NW1.

Although one Doppler lidar 20 is shown for the convenience of description in the flight assistance system 1 shown in FIG. 1, the flight assistance system 1 may include a plurality of Doppler lidars 20.

The wind state collection server 30 is, for example, a server device, and can be connected to the network NW1. The wind state collection server 30 collects the wind states detected by the Doppler lidar 20 and analyzes the wind states on the basis of the collected wind states. The wind state collection server 30 includes a network (NW) adapter H31, a memory H32, and a processor H33.

The NW adapter H31 is a communication device capable of being connected to the network NW1 such as, for example, a local area network (LAN) card.

The memory H32 is, for example, a storage device such as a random-access memory (RAM), a flash memory, or a hard disk drive (HDD) and stores various types of information and programs for use in the wind state collection server 30.

The processor H33 is, for example, a processing circuit that includes a central processing unit (CPU). The processor H33 executes various types of processes of the wind state collection server 30 by executing a program stored in the memory H32.

The flight assistance device 10 is, for example, a server device, and can be connected to the network NW1. The flight assistance device 10 optimizes a flight plan of a drone and assists the drone in performing a flight operation. In addition, in the present embodiment, an example in the case of a drone will be described as an example of a flying object. Here, the drone, for example, is assumed to be an unmanned flying object.

Moreover, the flight assistance device 10 includes an NW adapter H11, a memory H12, and a processor H13.

The NW adapter H11 is, for example, a communication device capable of being connected to the network NW1, such as a LAN card.

The memory H12 is, for example, a storage device such as a RAM, a flash memory, or an HDD, and stores various types of information and programs for use in the flight assistance device 10.

The processor H13 is, for example, a processing circuit including a CPU. The processor H13 executes various types of processes of the flight assistance device 10 by executing a program stored in the memory H12.

The user terminal (including the API) 40 is, for example, a personal computer, a smartphone, a tablet terminal, or the like, and is a terminal device used by a user who uses the flight assistance system 1. For example, in a cargo delivery service using a drone, the user terminal 40 transmits flight information that is information of a received delivery request to the flight assistance device 10 and receives a flight plan of the drone generated by the flight assistance device 10. In addition, various types of processes of the user terminal 40 in the flight assistance system 1 are implemented by, for example, using the API.

The user terminal 40 includes a NW adapter H41, a memory H42, a processor H43, an input device H44, and a display H45.

The NW adapter H41 is, for example, a communication device capable of being connected to the network NW1, such as a LAN card, a wireless LAN card, or a mobile communication device.

The memory H42 is, for example, a storage device such as a RAM, a flash memory, or an HDD, and stores various types of information and programs used by the user terminal 40.

The processor H43 is, for example, a processing circuit including a CPU. The processor H43 executes various types of processes of the user terminal 40 by executing a program stored in the memory H42.

The input device H44 is, for example, a keyboard, a pointing device, a touch sensor, or the like. The input device H44 receives an input of various types of information from the user when the flight assistance system 1 is used.

The display H45 is, for example, a display device such as a liquid crystal display. The display H45 displays various types of information when the flight assistance system 1 is used. The display H45, for example, displays a flight plan of the drone generated by the flight assistance device 10 to be described later and the like.

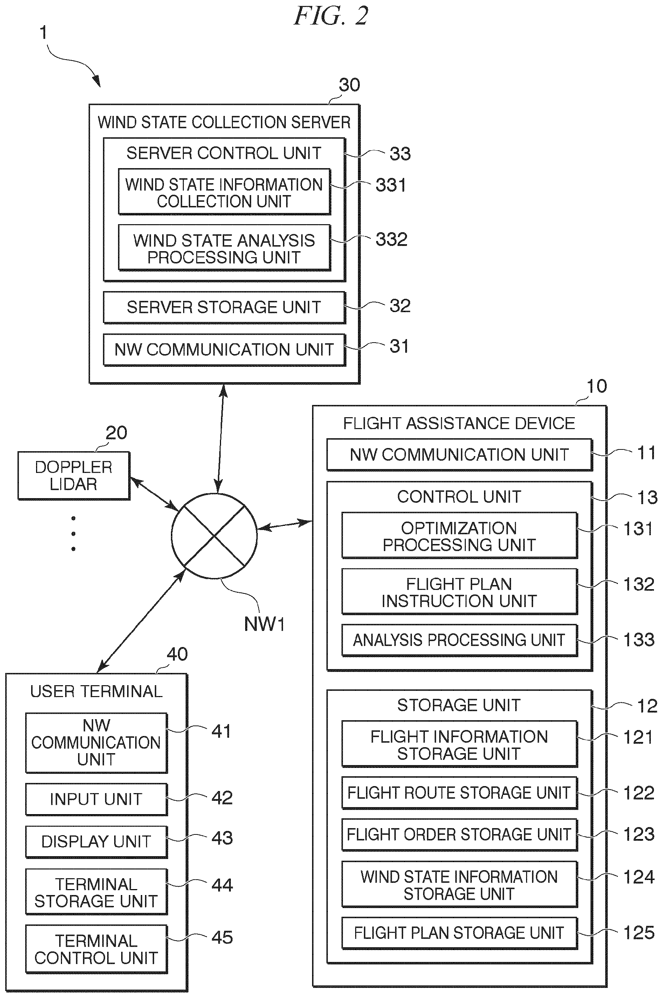

Next, a functional configuration of the flight assistance system 1 according to the present embodiment will be described with reference to FIG. 2.

FIG. 2 is a block diagram showing an example of the functional configuration of the flight assistance system 1 according to the present embodiment.

As shown in FIG. 2, the flight assistance system 1 includes the flight assistance device 10, the Doppler lidar 20, the wind state collection server 30, and the user terminal 40.

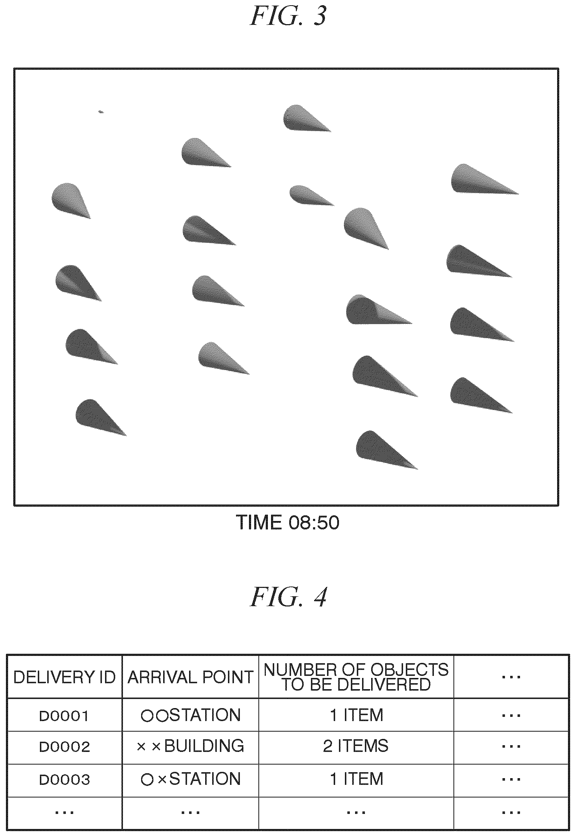

The Doppler lidar 20 radiates a laser to space and detects wind states including a wind direction and a wind speed using a Doppler effect. The Doppler lidar 20 detects the wind states (the wind direction and the wind speed) corresponding to three-dimensional position information (e.g., latitude, longitude, and altitude) in the space irradiated with the laser. The Doppler lidar 20 transmits wind state information associated with the detected wind states, position information (e.g., the three-dimensional position information), and time information to the wind state collection server 30 via the network NW1. Here, the wind state information output by the Doppler lidar 20 will be described with reference to FIG. 3.

FIG. 3 is a diagram showing an example of the wind state information in the present embodiment.

As shown in FIG. 3, the wind state information output by the Doppler lidar 20 is information obtained by detecting the wind direction and the wind speed at each three-dimensional position. The wind state information is information in which the time information, the position information, and the wind states (the wind direction and the wind speed) detected by the Doppler lidar 20 are associated. In FIG. 3, the wind direction and the wind speed at each position are indicated by a direction and length of a wedge.

Returning to the description of FIG. 2, the wind state collection server 30 collects the wind states including the wind direction and the wind speed detected by the Doppler lidar 20. Moreover, the wind state collection server 30 analyzes future wind states on the basis of the collected wind states and generates wind state information including time information, position information, and future wind states corresponding to the position information. In addition, the wind state collection server 30 is an example of a wind state collection unit in the flight assistance system 1.

The wind state collection server 30 includes an NW communication unit 31, a server storage unit 32, and a server control unit 33.

The NW communication unit 31 is a functional unit implemented by the NW adapter H31 and is connected to the network NW1 to perform data communication with external devices (e.g., the Doppler lidar 20 and the flight assistance device 10).

The server storage unit 32 includes the memory H32 and stores various types of information used by the wind state collection server 30. The server storage unit 32 stores wind state information, for example, as shown in FIG. 3. In addition, the server storage unit 32 stores wind state information including past wind state information output by the Doppler lidar 20 and wind state information (analyzed wind state information) at a future time analyzed by a wind state analysis processing unit 332 to be described later.

The server control unit 33 is a functional unit implemented by the processor H33 executing a program stored in the memory H32. The server control unit 33 includes a wind state information collection unit 331 and a wind state analysis processing unit 332.

The wind state information collection unit 331 collects wind state information output from the Doppler lidar 20 via the network NW1. That is, the wind state information collection unit 331 collects the wind states including the wind direction and the wind speed detected by the Doppler lidar 20. For example, the wind state information collection unit 331 collects wind state information for all areas where the drone flies and causes the server storage unit 32 to store the collected wind state information.

The wind state analysis processing unit 332 analyzes future wind states on the basis of the wind states collected by the wind state information collection unit 331. The wind state analysis processing unit 332 analyzes future wind state information on the basis of the collected past wind state information. The wind state analysis processing unit 332 generates wind state information including time information, position information, and future wind states corresponding to the position information as analyzed wind state information. In addition, the wind state analysis processing unit 332 analyzes, for example, changes in wind states in units of 10 minutes for up to 24 hours later (1 day later), as the analyzed wind state information.

The wind state analysis processing unit 332 causes the server storage unit 32 to store the analyzed wind state information. Moreover, for example, in response to a request from the flight assistance device 10, the wind state analysis processing unit 332 reads the analyzed wind state information corresponding to the designated position information from the server storage unit 32 and transmits the analyzed wind state information to the flight assistance device 10 via the NW communication unit 31.

In addition, the wind state analysis processing unit 332 may analyze future wind state information using weather information provided from meteorological agencies or private weather companies in each country instead of the wind states detected by the Doppler lidar 20 or together with the wind states.

The user terminal 40 includes an NW communication unit 41, an input unit 42, a display unit 43, a terminal storage unit 44, and a terminal control unit 45.

The NW communication unit 41 is a functional unit implemented by the NW adapter H41 and is connected to the network NW1 to perform data communication with, for example, the flight assistance device 10.

The input unit 42 is a functional unit implemented by the input device H44 and receives input information such as, for example, flight information and analysis conditions for an analysis process.

The display unit 43 is a functional unit implemented by the display H45, and, for example, displays a menu screen when the user inputs flight information, analysis conditions for the analysis process, and the like, a flight plan of the drone and an analysis result received from the flight assistance device 10, and the like.

The terminal storage unit 44 includes the memory H42 and stores various types of information used by the user terminal 40.

The terminal control unit 45 is a functional unit implemented by the processor H43 executing a program stored in the memory H42. The terminal control unit 45 executes various types of processes of the user terminal 40. For example, the terminal control unit 45 causes the display unit 43 to display a menu screen for inputting flight information and transmits the flight information received by the input unit 42 to the flight assistance device 10 via the NW communication unit 41.

Moreover, the terminal control unit 45, for example, receives a flight plan of the drone from the flight assistance device 10 via the NW communication unit 41 and causes the display unit 43 to display the flight plan of the drone.

Moreover, the terminal control unit 45, for example, transmits the analysis conditions of the flight plan received by the input unit 42 to the flight assistance device 10 via the NW communication unit 41. The terminal control unit 45, for example, receives an analysis result from the flight assistance device 10 via the NW communication unit 41 and causes the display unit 43 to display the analysis result.

The flight assistance device 10 generates an optimized flight plan for a cargo delivery by the drone in accordance with the flight information received from the user terminal 40 via the network NW1. The flight assistance device 10 transmits the generated flight plan to the user terminal 40 via the network NW1. Moreover, the flight assistance device 10 executes an analysis process related to the optimization of the flight plan in response to a request from the user terminal 40 and transmits a result of executing the analysis process to the user terminal 40 via the network NW1.

The flight assistance device 10 includes a NW communication unit 11, a storage unit 12, and a control unit 13.

The NW communication unit 11 is a functional unit implemented by the NW adapter H11 and is connected to the network NW1 to perform data communication with, for example, the wind state collection server 30 and the user terminal 40.

The storage unit 12 includes a memory H12 and stores various types of information used by the flight assistance device 10. The storage unit 12 includes a flight information storage unit 121, a flight route storage unit 122, a flight order storage unit 123, a wind state information storage unit 124, and a flight plan storage unit 125.

The flight information storage unit 121 stores flight information indicating a delivery request (delivery mission) of a drone. The flight information includes arrival point information indicating at least a location of the arrival point, and the flight information is, for example, information received from the user terminal 40 via the NW communication unit 11. Here, an example of data of the flight information storage unit 121 will be described with reference to FIG. 4.

FIG. 4 is a diagram showing an example of data of the flight information storage unit 121 in the present embodiment.

As shown in FIG. 4, the flight information storage unit 121 stores a delivery ID, an arrival point, and the number of objects to be delivered in association with each other.

In FIG. 4, the delivery ID is identification information of the delivery request. Moreover, the arrival point indicates a name of a location of the arrival point. The arrival point is an example of arrival point information. Moreover, the number of objects to be delivered is the number of cargos whose delivery by the drone is requested.

In the example shown in FIG. 4, the delivery (mission) with the delivery ID "D0001" indicates that the arrival point is "∘∘ station" and the number of objects to be delivered is "1." Moreover, the delivery (mission) with the delivery ID "D0002" indicates that the arrival point is "×× building" and the number of objects to be delivered is "2." Moreover, the delivery (mission) with the delivery ID "D0003" indicates that the arrival point is "∘× station" and the number of objects to be delivered is "1."

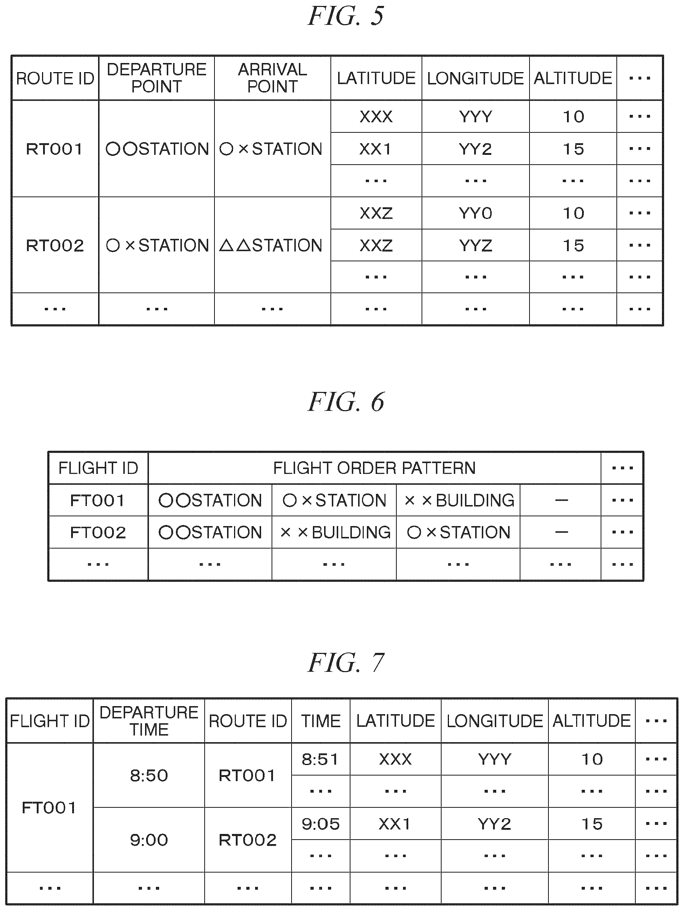

Returning to the description of FIG. 2, the flight route storage unit 122 stores the flight route of the drone. The flight route here is a flight route preset when the drone flies from the location of the departure point to the location of the arrival point. The flight route storage unit 122 stores route information in which departure point information indicating the location of the departure point, arrival point information indicating the location of the arrival point, and the flight route are associated. Here, an example of data of the flight route storage unit 122 will be described with reference to FIG. 5.

FIG. 5 is a diagram showing an example of data of the flight route storage unit 122 in the present embodiment.

As shown in FIG. 5, the flight route storage unit 122 stores route information in which a route ID, a departure point, an arrival point, latitude, longitude, and altitude are associated.

In FIG. 5, the route ID is identification information for identifying a flight route. Moreover, the departure point is a name of a location of the departure point and is an example of departure point information indicating the location of the departure point. Moreover, the arrival point is a name of a location of the arrival point and is an example of arrival point information indicating the location of the arrival point. Moreover, latitude, longitude, and altitude are examples of position information indicating the flight route.

As the position information indicating the flight route, positions through which the drone passes from the departure point to the arrival point are sequentially stored. Although the position information is three-dimensional position information of latitude, longitude, and altitude in the example shown in FIG. 5, the position information may be two-dimensional position information of latitude and longitude that does not include altitude.

For example, in the example shown in FIG. 5, the route information of the route ID "RT001" indicates that the departure point is "∘∘ station" and the arrival point is "∘× station." Moreover, the flight route of this route information is a route along which the drone moves in the order of a position of (latitude "XXX," longitude "YYY," altitude "10"), a position of (latitude "XX1," longitude "YY2," altitude "15"), and the like. In addition, the unit of altitude is assumed to be meters (m).

Returning to the description of FIG. 2, the flight order storage unit 123 stores a flight order pattern indicating a flight order for traveling in a circuit to the location of the arrival point. Here, an example of data of the flight order storage unit 123 will be described with reference to FIG. 6.

FIG. 6 is a diagram showing an example of data of the flight order storage unit 123 in the present embodiment.

As shown in FIG. 6, the flight order storage unit 123 stores a flight ID and a flight order pattern in association with each other.

In FIG. 6, the flight ID is identification information for identifying a flight order pattern. Moreover, the flight order pattern shows names of locations of arrival points in the flight order.

For example, in the example shown in FIG. 6, the flight order pattern with the flight ID "FT001" is a flight order pattern in the order of "∘∘ station" → "∘× station" → "×× station."

Moreover, the flight order pattern with the flight ID "FT002" is a flight order pattern in the order of "∘∘ station," "∘× station," → "×× station."

Returning to the description of FIG. 2, the wind state information storage unit 124 stores wind state information received from the wind state collection server 30. The wind state information storage unit 124, for example, stores wind state information as shown in FIG. 3 in association with future time information (or date and time information). That is, the wind state information storage unit 124 stores time information (or date and time information), position information (e.g., three-dimensional position information of latitude, longitude, and altitude), and wind states (wind direction and wind speed) in association with each other.

The wind state information storage unit 124 stores wind state information, for example, up to 18 hours later.

The flight plan storage unit 125 stores an optimized flight plan that is a flight plan of the drone generated by the flight assistance device 10. The flight plan is information obtained by adding time information (time stamp) to the flight route for each arrival point in the flight order according to the flight order pattern described above. Here, an example of data of the flight assistance device 10 will be described with reference to FIG. 7.

FIG. 7 is a diagram showing an example of data of the flight plan storage unit 125 in the present embodiment.

As shown in FIG. 7, the flight plan storage unit 125 stores a flight ID, a departure time, a route ID, time, latitude, longitude, and altitude in association with each other.

In FIG. 7, the departure time is a departure time of delivery (flight) of the drone. Moreover, the latitude, longitude, and altitude are position information on the flight route and the time is a scheduled time of passage at a position of the position information.

For example, in the example shown in FIG. 7, first, the flight plan of the flight ID "FT001" indicates a plan in which the drone departs at "8:50" (the time 8:50) for the flight of the flight route ("∘∘ station" → "∘× station") of the route ID "RT001." Moreover, in the flight route ("∘∘ station" → "∘× station"), a plan in which the drone flies in the order of (latitude "XXX," longitude "YYY," altitude "10") at the time "8:51" and the like is shown.

Moreover, the flight plan with the flight ID "FT001" indicates a plan in which after the flight route ("∘∘ station" → "∘× station") of the route ID "RT001," the drone departs at "9:00" for the flight of the flight route ("∘× station" → "ΔΔ station") of the route ID "RT001." Moreover, in the flight route ("∘× station" → "ΔΔ station"), a plan in which the drone flies in the order of (latitude "XX1," longitude "YY2," altitude "15") at time "9:05" and the like is shown.

Returning to the description of FIG. 2, the control unit 13 is a functional unit implemented by the processor H13 executing a program stored in the memory H12. The control unit 13 executes various types of processes of the flight assistance device 10. The control unit 13 receives, for example, flight information, via the NW communication unit 11, and causes the flight information storage unit 121 to store the flight information.

Moreover, the control unit 13 includes an optimization processing unit 131, a flight plan instruction unit 132, and an analysis processing unit 133.

The optimization processing unit 131 optimizes the flight plan of the drone on the basis of the flight information received from the user terminal 40, the wind state information generated by the wind state collection server 30, and the route information stored in the flight route storage unit 122. First, the optimization processing unit 131 decides a flight order pattern on the basis of wind state information and route information.

The optimization processing unit 131 generates a plurality of flight order patterns for flight order combinations from the arrival point information included in the flight information. The optimization processing unit 131 causes the flight order storage unit 123 to store the generated flight order patterns, for example, as shown in FIG. 6.

Moreover, the optimization processing unit 131 acquires wind state information (including analyzed wind state information) corresponding to the movement route included in the flight order pattern from the wind state collection server 30 via the NW communication unit 11. The optimization processing unit 131 selects an optimal flight order pattern on the basis of the wind state information from among the plurality of flight order patterns that have been generated.

The optimization processing unit 131 decides the optimal flight order pattern on the basis of, for example, optimization indices such as power consumption, a flight period of time, and a danger level. That is, the optimization processing unit 131 generates optimization index values such as the power consumption, the flight period of time, and the danger level of each flight order pattern using wind state information and compares the optimization index values to decide the optimal flight order pattern.

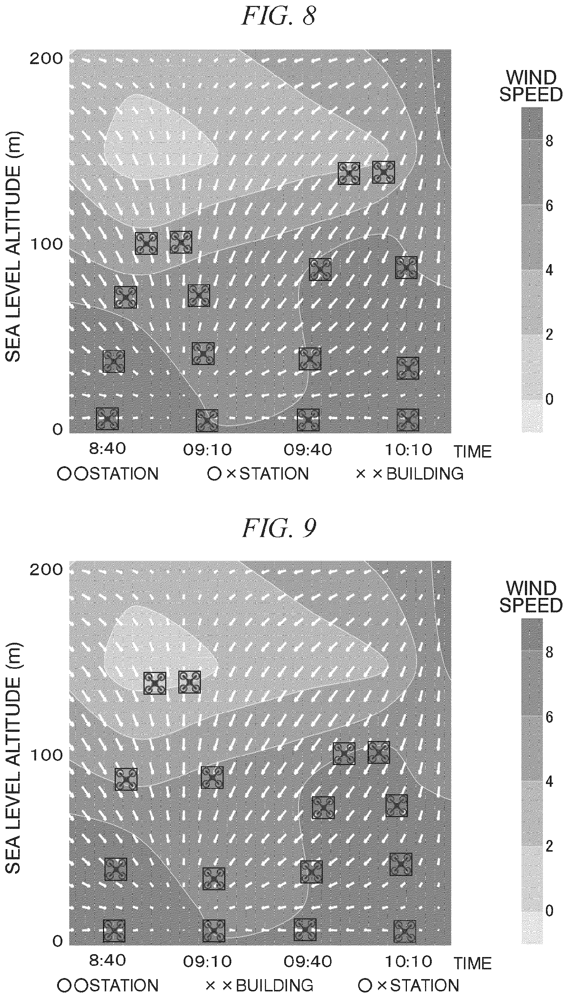

Here, a specific example of a process of deciding a flight order pattern will be described with reference to FIGS. 8 and 9.

FIGS. 8 and 9 are diagrams showing an example of the flight order pattern in the present embodiment.

The diagrams shown in FIGS. 8 and 9 are heat map diagrams in which the wind speed is visualized by shades of color. The vertical axis of the heat map diagram represents sea level altitude and the horizontal axis represents a position and time of the plane. Moreover, an arrow in the heat map diagram indicates the wind direction.

Moreover, the mark of each drone indicates a position of the drone according to the flight route.

In addition, in FIGS. 8 and 9, the two-dimensional position information of latitude and longitude is simplified by making it one-dimensional so that conceptual understanding is facilitated.

FIG. 8 shows an example of a flight order pattern in which the drone flies in the order of "∘∘ station" → "∘× station" → "×× building." Moreover, FIG. 9 shows an example of a flight order pattern in which the drone flies in the order of "∘∘ station" → "×× building" → "∘× station."

The optimization processing unit 131, for example, calculates the power consumption of the drone in the flight order pattern shown in FIG. 8 and the power consumption of the drone in the flight order pattern shown in FIG. 9 and decides the flight order pattern with lower power consumption.

In addition, when the flight order pattern is decided, the optimization processing unit 131 changes the start time (departure time) and uses analyzed wind state information for a longer period (e.g., up to 18 hours later) than when the flight plan is optimized.

Moreover, the optimization processing unit 131 may use the flight period of time required for moving the drone instead of power consumption or may use the danger level calculated from the wind state information and position information. Here, it is assumed that, for example, as the wind speed value increases, the danger level increases, and, for example, as the flight is performed at a position where there is a large flow of people, the danger level increases. That is, the optimization processing unit 131 may decide the flight order pattern so that the optimization index is minimized or so that the optimization index is less than or equal to a threshold value.

Moreover, when the flight route includes two-dimensional position information of latitude and longitude and does not include altitude information, the optimization processing unit 131 may change the altitude information to decide the flight order pattern.

Returning to the description of FIG. 2, next, the optimization processing unit 131 changes the start time (departure time) of the flight of the flight order pattern and optimizes a flight plan including the start time and flight order pattern according to an optimization index based on the flight order pattern, wind state information, and route information. The optimization index here is the above-described power consumption, flight period of time, danger level, or the like.

For example, when the optimization index is the power consumption, the optimization processing unit 131 optimizes the flight plan so that the power consumption is minimized or the power consumption is less than or equal to the threshold power by shifting the start time (departure time) of the flight.

For example, when the optimization index is the flight period of time, the optimization processing unit 131 optimizes the flight plan so that the flight period of time is minimized or the flight period of time is less than or equal to a threshold period of time by shifting the start time (departure time) of the flight.

For example, when the optimization index is the danger level that is a level of danger, the optimization processing unit 131 optimizes the flight plan so that the danger level is minimized or the danger level is less than or equal to a threshold level by shifting the start time (departure time) of the flight.

In addition, the optimization processing unit 131 may optimize the flight plan by combining a plurality of optimization indices. Moreover, in response to a request of the user received from the user terminal 40, the optimization priority order of the power consumption, the flight period of time, and the danger level may be changed.

Moreover, when the flight route includes two-dimensional position information of latitude and longitude and does not include altitude information, the optimization processing unit 131 may change the altitude information together with the start time (departure time) of the flight to optimize the flight plan.

Moreover, when the start time (departure time) is changed and the flight plan is optimized, the optimization processing unit 131 uses analyzed wind state information for a shorter period (e.g., a period of up to 3 hours later) than when the flight order pattern is decided.

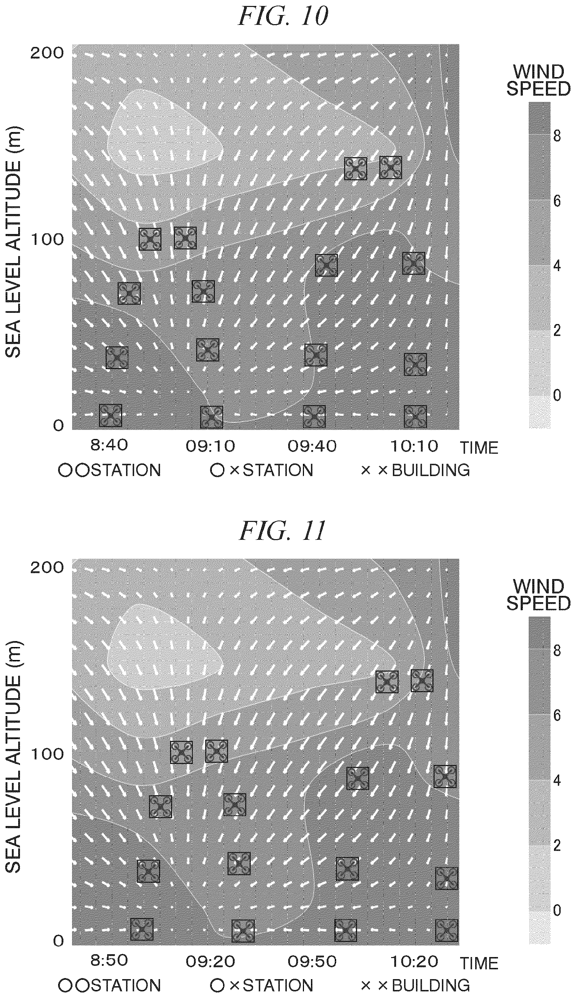

Here, an optimization process in which the time information is changed in the present embodiment will be described with reference to FIGS. 10, 11, 12, and 13.

FIGS. 10 and 11 are diagrams showing an example of an optimization process in which the time information has been changed in the present embodiment.

The diagrams shown in FIGS. 10 and 11 are heat map diagrams in which the wind speed is visualized by shades of color. The vertical axis of the heat map diagram represents sea level altitude and the horizontal axis represents a position and time of the plane. Moreover, an arrow in the heat map diagram indicates the wind direction.

Moreover, in FIGS. 10 and 11, the flight order pattern is the same and the start time of the flight is shifted as a change in the time information.

The optimization processing unit 131 calculates the power consumption of each flight order pattern of FIGS. 10 and 11 by shifting the start time (departure time) of the flight and adopts the start time (departure time) of the flight with the lower power consumption.

The optimization processing unit 131 executes this process by shifting the start time (departure time) of the flight a plurality of times and optimizes the flight plan of the drone so that power consumption is minimized.

The optimization processing unit 131 causes the flight plan storage unit 125 to store the optimized drone flight plan, for example, as shown in FIG. 7.

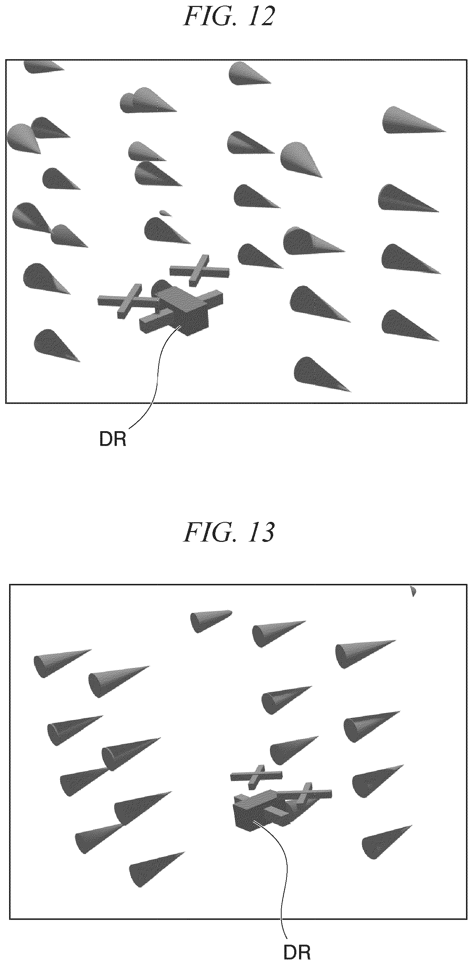

Moreover, FIGS. 12 and 13 are diagrams showing an example of a flight image of a drone in which the time information has been changed in the present embodiment. FIGS. 12 and 13 show flight images of a drone when the start time (departure time) of the flight is shifted. Here, a drone DR is assumed to be flying from the left side to the right side.

In FIGS. 12 and 13, the flight position of the drone DR is different between FIGS. 12 and 13 because the start time (departure time) of the flight order pattern is shifted. The drone DR shown in FIG. 12 is flying in an airspace with a favorable wind and a relatively weak wind in a movement direction, while the drone DR shown in FIG. 13 is flying in an airspace with an unfavorable wind and a strong wind in a movement direction. In this case, the power consumption is higher in the case shown in FIG. 13 than in the case shown in FIG. 12.

Returning to the description of FIG. 2, the flight plan instruction unit 132 transmits the flight plan of the drone generated by the optimization processing unit 131 to an external device via the NW communication unit 11. The flight plan instruction unit 132 transmits the flight plan of the drone stored in the flight plan storage unit 125 to the user terminal 40 via the NW communication unit 11 and causes the display unit 43 of the user terminal 40 to display the flight plan.

Moreover, the flight plan instruction unit 132 may transmit the flight plan to a control device (not shown) (e.g., a remote-control device) of the drone. Moreover, when the drone is auto-pilotable (automatically controllable), the flight plan instruction unit 132 may transmit the flight plan to the control unit of the drone.

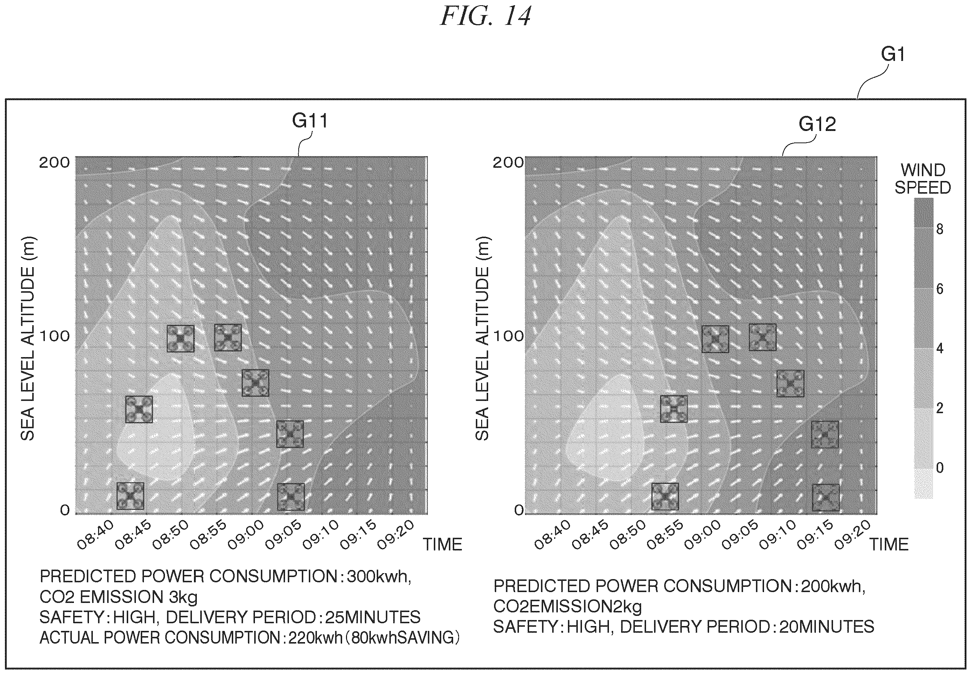

The analysis processing unit 133 executes an analysis process on the flight plan in accordance with analysis conditions received from the user terminal 40 via the NW communication unit 11 and transmits an analysis result to the user terminal 40. For example, the analysis processing unit 133 may designate the start time of the flight of the flight order pattern as an analysis condition, calculate an optimization index, generate image data obtained by comparing calculation results as shown in FIG. 14, and cause the display unit 43 of the user terminal 40 to display the generated image data.

FIG. 14 is a diagram showing an example of an analysis process in which the time information has been changed in the present embodiment.

As shown in FIG. 14, the analysis processing unit 133 designates a start time of the flight of the flight order pattern as an analysis condition, calculates predicted power consumption, CO₂ (carbon dioxide) emission, a danger level (safety), and a delivery period (flight period of time), generates an image G1 for comparing calculation results, and transmits the image G1 to the user terminal 40. The terminal control unit 45 of the user terminal 40 displays the image G1 on the display unit 43.

In addition, in the image G1, an image G11 and an image G12 are heat map diagrams in which the time information has been changed, and the analysis results can be visually compared by displaying the images G11 and the image G12.

Moreover, the image G1 may display analysis results of predicted power consumption, CO₂ (carbon dioxide) emission, a danger level (safety), and a delivery period (flight period of time) and display an actual power consumption result and an actual saving result such as, for example, "actual power consumption: 220 wh (80 kwh saving)."

Moreover, the analysis processing unit 133 may cause the start time of the flight order pattern to slide on the image, for example, in a heat map diagram as shown in the image G11, calculate predicted power consumption, CO₂ (carbon dioxide) emission, a danger level (safety), a delivery period (flight period of time), and the like according to the start time, and cause the display unit 43 to display calculation results.

Next, an operation of the flight assistance system 1 according to the present embodiment will be described with reference to the drawings.

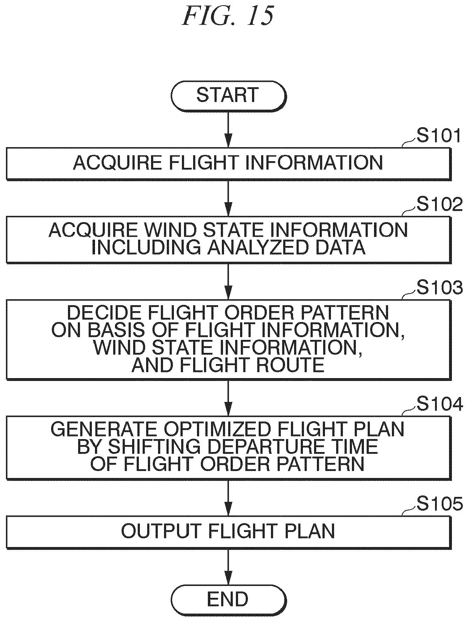

FIG. 15 is a flowchart showing an example of an optimization process of the flight assistance system 1 in the present embodiment.

As shown in FIG. 15, the flight assistance device 10 of the flight assistance system 1 acquires flight information (step S101). The control unit 13 of the flight assistance device 10 acquires flight information from the user terminal 40 via the NW communication unit 11. The control unit 13 causes the flight information storage unit 121 to store the acquired flight information, for example, as shown in FIG. 4.

Subsequently, the control unit 13 acquires wind state information including analyzed data (analyzed wind state information) (step S102). The control unit 13 acquires wind state information from the wind state collection server 30 via the NW communication unit 11 and causes the wind state information storage unit 124 to store the acquired wind state information.

Subsequently, the optimization processing unit 131 of the control unit 13 decides a flight order pattern on the basis of flight information, wind state information, and a flight route (step S103). The optimization processing unit 131 generates a plurality of flight order patterns for flight order combinations from arrival point information included in the flight information. Moreover, the optimization processing unit 131 decides an optimal flight order pattern in which an optimization index (e.g., power consumption) is minimized.

Subsequently, the optimization processing unit 131 generates an optimized flight plan by shifting a departure time of the flight order pattern (step S104). The optimization processing unit 131 calculates a value of an optimization index (e.g., power consumption) when the departure time of the flight order pattern is shifted and decides the flight plan of the drone in which the value of the optimization index (e.g., power consumption) is minimized. The optimization processing unit 131 causes the flight plan storage unit 125 to store the optimized flight plan.

Subsequently, the flight plan instruction unit 132 of the control unit 13 outputs the flight plan (step S105). The flight plan instruction unit 132 transmits the flight plan of the drone stored in the flight plan storage unit 125 to, for example, the user terminal 40, via the NW communication unit 11 and causes the display unit 43 of the user terminal 40 to display the flight plan. After the processing of step S105, the control unit 13 ends the optimization process.

Although the example in which power consumption is used as an optimization index has been described in the example shown in FIG. 15 described above, the same is true even if the flight period of time and danger level are used.

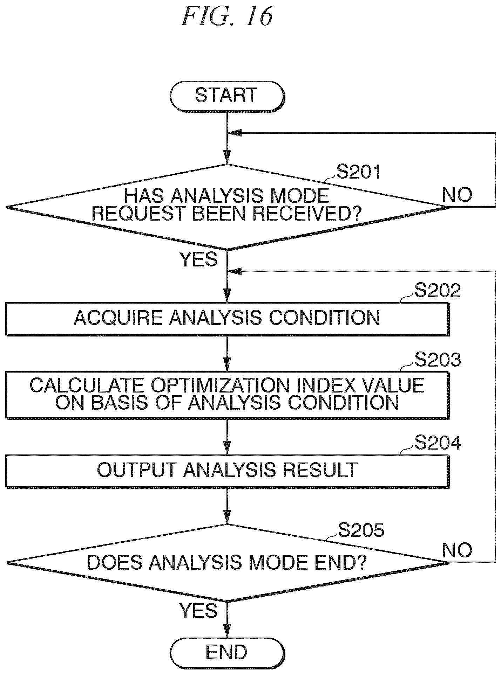

Next, the analysis process of the flight assistance system 1 according to the present embodiment will be described with reference to FIG. 16.

As shown in FIG. 16, the analysis processing unit 133 of the flight assistance device 10 determines whether or not an analysis mode request has been received (step S201). The analysis processing unit 133 determines whether or not an analysis mode request for requesting an analysis mode has been received from the user terminal 40 via the NW communication unit 11. When the analysis processing unit 133 has received the analysis mode request (step S201: YES), the process proceeds to step S202. Moreover, when the analysis processing unit 133 has received no analysis mode request (step S201: NO), the process returns to step S201.

In step S202, the analysis processing unit 133 acquires analysis conditions. The analysis processing unit 133 receives analysis conditions (e.g., the designation of a start time of the flight, the designation of a comparison target, and the like) from the user terminal 40 via the NW communication unit 11.

Subsequently, the analysis processing unit 133 calculates an optimization index value that is the value of the optimization index on the basis of the analysis conditions (step S203). The analysis processing unit 133, for example, calculates predicted power consumption, a danger level (safety), a delivery period (flight period of time), and the like.

Subsequently, the analysis processing unit 133 outputs an analysis result (step S204). The analysis processing unit 133, for example, transmits an output result such as the image G1 of FIG. 14 to the user terminal 40 via the NW communication unit 11, and, for example, causes the display unit 43 of the user terminal 40 to display the output result.

Subsequently, the analysis processing unit 133 determines whether or not to end the analysis mode (step S205). The analysis processing unit 133 determines whether or not to end the analysis mode according to whether or not an analysis mode end request has been received from the user terminal 40 via the NW communication unit 11. The analysis processing unit 133 ends the analysis process when the analysis mode ends (step S205: YES). Moreover, when the analysis mode does not end (step S205: NO), the analysis processing unit 133 returns the process to step S202.

As described above, the flight assistance system 1 according to the present embodiment includes the wind state collection server 30 (wind state collection unit), the flight route storage unit 122, and the optimization processing unit 131. The wind state collection server 30 collects wind states including a wind direction and a wind speed detected by the Doppler lidar 20 (wind state detection device), analyzes future wind states on the basis of at least one of the collected wind states and weather information, and generates wind state information including time information, position information, and future wind states corresponding to the position information. The flight route storage unit 122 stores route information in which departure point information indicating a location of a departure point, arrival point information indicating a location of an arrival point, and a flight route preset when a drone (flying object) flies from the location of the departure point to the location of the arrival point are associated. The optimization processing unit 131 optimizes a flight plan of the drone on the basis of flight information including the arrival point information, the wind state information generated by the wind state collection server 30, and the route information stored in the flight route storage unit 122. The optimization processing unit 131 decides a flight order pattern indicating a flight order for traveling in a circuit to the location of the arrival point corresponding to the flight information on the basis of the wind state information and the route information. The optimization processing unit 131 changes a flight start time of the flight order pattern to optimize the flight plan including the start time and the flight order pattern according to an optimization index (e.g., power consumption, a flight period of time, a danger level, or the like) based on the flight order pattern, the wind state information, and the route information.

Thereby, the flight assistance system 1 according to the present embodiment can generate an optimal flight plan corresponding to changes in wind states including the elapse of time using, for example, an optimization index, in the flight operation of the drone and can provide an optimal flight plan in the flight operation of the drone. Therefore, the flight assistance system 1 according to the present embodiment can improve the efficiency of the flight operation of the drone.

Moreover, the flight assistance system 1 according to the present embodiment can simplify the optimization process and reduce an amount of processing (amount of calculation) of the optimization process because a flight route is preset and the flight start time of the flight order pattern is changed and optimized.

Moreover, in the present embodiment, the optimization index includes power consumption. The optimization processing unit 131 optimizes the flight plan so that power consumption is minimized. Moreover, the optimization processing unit 131 may optimize the flight plan so that the power consumption is less than or equal to the threshold power.

Thereby, because the flight assistance system 1 according to the present embodiment can reduce power consumption in the operation of the drone, the efficient operation of the drone can be performed with reduced power consumption.

Moreover, in the present embodiment, the optimization indices include a flight period of time. The optimization processing unit 131 optimizes the flight plan so that the flight period of time is minimized. Moreover, the optimization processing unit 131 may optimize the flight plan so that the flight period of time is less than or equal to the threshold period.

Thereby, because the flight assistance system 1 according to the present embodiment can reduce the flight period of time, the efficient operation of the drone can be performed with a reduced flight period of time.

Moreover, in the present embodiment, the optimization indices include the danger level that is a level of danger. The optimization processing unit 131 optimizes the flight plan so that the danger level is less than or equal to the threshold level.

Thereby, because the flight assistance system 1 according to the present embodiment can reduce the danger level, the safe, stable, and efficient operation of the drone can be performed.

Moreover, in the present embodiment, the optimization indices may include power consumption, a flight period of time, and a danger level indicating the level of danger. The optimization processing unit 131 may change the optimization priority order of the power consumption, the flight period of time, and the danger level in response to the user's request.

Thereby, the flight assistance system 1 according to the present embodiment can change the optimization index to be prioritized in response to the user's request and, for example, it is possible to flexibly and efficiently operate the drone, such as prioritizing power consumption and prioritizing a flight period of time during a busy season.

Moreover, in the present embodiment, the optimization processing unit 131 decides a flight order pattern on the basis of an optimization index.

Thereby, the flight assistance system 1 according to the present embodiment can decide the optimal flight order pattern and can operate the drone with higher efficiency.

Moreover, in the present embodiment, the position information is three-dimensional position information of latitude, longitude, and altitude. The wind state collection server 30 generates wind state information in which the time information, the three-dimensional position information, and the wind states are associated.

Thereby, the flight assistance system 1 according to the present embodiment can use high-precision wind state information based on three-dimensional position information, and improve the accuracy of optimizing the flight plan.

Moreover, in the present embodiment, the flight route may include two-dimensional position information of latitude and longitude. In this case, in addition to changing the start time, the optimization processing unit 131 may change the flight altitude to decide the flight order pattern and optimize the flight plan.

Thereby, the flight assistance system 1 according to the present embodiment can more flexibly optimize the flight plan including the flight altitude.

Moreover, according to the present embodiment, the flight assistance device 10 includes the flight route storage unit 122 and the optimization processing unit 131. The flight route storage unit 122 stores route information in which departure point information indicating a location of a departure point, arrival point information indicating a location of an arrival point, and a flight route preset when a drone (flying object) flies from the location of the departure point to the location of the arrival point are associated. The optimization processing unit 131 optimizes a flight plan of the drone on the basis of flight information including the arrival point information, wind state information including future wind states analyzed on the basis of wind states including a wind direction and a wind speed detected by the Doppler lidar 20, time information, and position information, and the route information stored in the flight route storage unit 122. The optimization processing unit 131 decides a flight order pattern indicating a flight order for traveling in a circuit to the location of the arrival point corresponding to the flight information on the basis of the wind state information and the route information. The optimization processing unit 131 changes a flight start time of the flight order pattern to optimize the flight plan including the start time and the flight order pattern according to an optimization index (e.g., power consumption, a flight period of time, a danger level, or the like) based on the flight order pattern, the wind state information, and the route information.

Thereby, the flight assistance device 10 according to the present embodiment has an effect similar to that of the flight assistance system 1 described above and can provide an optimal flight plan in the flight operation of the drone and improve the efficiency of the flight operation of the drone.

Moreover, a flight assistance method according to the present embodiment is a flight assistance method of the flight assistance system 1 including the flight route storage unit 122 described above. In the flight assistance method according to the present embodiment, the wind state collection server 30 collects wind states including a wind direction and a wind speed detected by the Doppler lidar 20, analyzes future wind states on the basis of the collected wind states, and generates wind state information including time information, position information, and future wind states corresponding to the position information. The optimization processing unit 131 executes an optimization process of optimizing a flight plan of the drone (flying object) on the basis of flight information including the arrival point information, the wind state information generated by the wind state collection server 30, and the route information stored in the flight route storage unit 122. Moreover, in the optimization process, the optimization processing unit 131 decides a flight order pattern indicating a flight order for traveling in a circuit to the location of the arrival point corresponding to the flight information on the basis of the wind state information and the route information, and changes a flight start time of the flight order pattern to optimize the flight plan including the start time and the flight order pattern according to an optimization index based on the flight order pattern, the wind state information, and the route information.

Thereby, the flight assistance method according to the present embodiment has an effect similar to that of the flight assistance system 1 described above and can provide an optimal flight plan in the flight operation of the drone and improve the efficiency of the flight operation of the drone.

In addition, the present disclosure is not limited to the above-described embodiment and changes can be made without departing from the spirit of the present disclosure.

For example, although the example using the Doppler lidar 20 as an example of the wind state detection device has been described in the above-described embodiment, the present disclosure is not limited thereto. The wind state detection device may use other devices such as, for example, Doppler radar and Doppler sodar.

Moreover, although the example in which the flying object is a drone has been described in the above embodiment, the flying object is not limited thereto and may be, for example, a manned flying object of electric vertical take-off and landing (eVTOL). Moreover, the drone may be an unmanned flying object that is auto-pilotable.

Moreover, although the example in which the flight assistance system 1 optimizes the flight plan using wind state information has been described in the above embodiment, the present disclosure is not limited thereto. For example, the flight assistance system 1 may use a combination of weather information such as rain, snow, lightning, and fog in addition to the wind state information.

Moreover, although the example in which a flow of people and a wind speed are used as factors for calculating the danger level has been described in the above embodiment, the present disclosure is not limited thereto and, for example, an operating time period of a train or an airplane, a busy season, an off-season, weather information, and the like may be used.

Moreover, although the example of the configuration in which the wind state collection server 30 is provided as a device different from the flight assistance device 10 has been described in the above-described embodiment, the present disclosure is not limited thereto and the flight assistance device 10 may have the function of the wind state collection server 30.

Moreover, in the above-described embodiment, a part or all of the configuration of the storage unit 12 provided in the flight assistance device 10 may be provided outside the flight assistance device 10. Moreover, the flight assistance device 10 may include a plurality of devices (server devices).

Moreover, although the example in which the optimization processing unit 131 optimizes the flight plan by changing the start time after deciding one flight order pattern has been described in the above-described embodiment, the present disclosure is not limited thereto. The optimization processing unit 131, for example, may be configured to decide flight order patterns of all combinations of retransmission destinations included in the flight information, change a start time with respect to all combinations of the flight order patterns to decide an optimal flight order pattern, and generate a flight plan based on the optimal flight order pattern.

Moreover, in the above-described embodiment, the optimization processing unit 131 may be configured to perform a correction process based on a difference between a predicted value and an actual value when there is the difference between the predicted value (e.g., power consumption and a flight period of time) and the actual value (e.g., power consumption and a flight period of time) of the generated flight plan. Thereby, the accuracy of the generation of the flight plan of the drone can be further improved.

Moreover, the optimization processing unit 131 may be configured to periodically acquire the latest wind state information and periodically review the flight plan.

Moreover, the algorithm used for optimization may use, for example, the following algorithms such as (1) to (5).
(1) Simplex algorithms designed for linear programming
(2) Extended simplex algorithms designed for quadratic programming and linear-fractional programming
(3) Variations of simplex algorithms particularly suitable for network optimization
(4) Combinatorial algorithms
(5) Quantum optimization algorithms

Moreover, although the example in which the wind state collection server 30 collects and analyzes the wind states detected by the Doppler lidar 20 has been described in the above-described embodiment, the present disclosure is not limited thereto and, for example, information provided from a meteorological agency of each country or a private weather company may be used.

In addition, each configuration of the flight assistance system 1 described above has an internal computer system. Also, a process in each configuration provided in the above-described flight assistance system 1 may be performed by recording a program for implementing the function of each configuration provided in the flight assistance system 1 described above on a computer-readable recording medium and causing a computer system to read and execute the program recorded on the recording medium. Here, "causing a computer system to read and execute the program recorded on the recording medium" includes installing a program on the computer system. It is assumed that the "computer system" used here includes an OS and hardware such as peripheral devices.

Moreover, the "computer system" may also include a plurality of computer devices connected via a network including the Internet, a WAN, a LAN, and a communication circuit such as a dedicated circuit. Moreover, the "computer-readable recording medium" refers to a portable medium such as a flexible disk, a magneto-optical disk, a ROM, or a CD-ROM, or a storage device such as a hard disk built into a computer system. Thus, the recording medium storing the program may be a non-transient recording medium such as a CD-ROM.

Moreover, the recording medium also includes a recording medium provided inside or outside that can be accessed from a distribution server for distributing the program. In addition, a configuration may be such that the program is divided into a plurality of parts and the parts are downloaded at different timings and then combined with each configuration provided in the flight assistance system 1, or distribution servers for distributing the parts of the divided program may be different. Furthermore, the "computer-readable recording medium" is assumed to include those that hold a program for a certain period of time like a volatile memory (RAM) inside a computer system serving as a server or client when the program is transmitted via a network. Moreover, the above-described program may be for implementing some of the above-described functions. Furthermore, the above-described program may be for implementing the above-described function in combination with a program already recorded on the computer system, a so-called difference file (difference program).

### [Description of Reference Signs]

1: Flight assistance system
10: Flight assistance device
11, 31, 41: NW communication unit
12: Storage unit
13: Control unit
20: Doppler lidar
30: Wind state collection server
32: Server storage unit
33: Server control unit
40: User terminal (including API)
42: Input unit
43: Display unit
44: Terminal storage unit
45: Terminal control unit
121: Flight information storage unit
122: Flight route storage unit
123: Flight order storage unit
124: Wind state information storage unit
125: Flight plan storage unit
131: Optimization processing unit
132: Flight plan instruction unit
133: Analysis processing unit
331: Wind state information collection unit
332: Wind state analysis processing unit
DR: Drone
H11, H31, H41: NW adapter
H12, H32, H42: Memory
H13, H33, H43: Processor
H44: Input device
H45: Display

## Claims

1. A flight assistance system comprising:
a wind state collection unit configured to collect wind states including a wind direction and a wind speed detected by a wind state detection device, analyze future wind states on the basis of at least one of the collected wind states and weather information, and generate wind state information including time information, position information, and future wind states corresponding to the position information;
a flight route storage unit configured to store route information in which departure point information indicating a location of a departure point, arrival point information indicating a location of an arrival point, and a flight route preset when a flying object flies from the location of the departure point to the location of the arrival point are associated; and
an optimization processing unit configured to optimize a flight plan of the flying object on the basis of flight information including the arrival point information, the wind state information generated by the wind state collection unit, and the route information stored in the flight route storage unit,
wherein the optimization processing unit
decides a flight order pattern indicating a flight order for traveling in a circuit to the location of the arrival point corresponding to the flight information on the basis of the wind state information and the route information, and
changes a flight start time of the flight order pattern to optimize the flight plan including the start time and the flight order pattern according to an optimization index based on the flight order pattern, the wind state information, and the route information.

2. The flight assistance system according to claim 1,
wherein the optimization index includes power consumption, and
wherein the optimization processing unit optimizes the flight plan so that the power consumption is minimized.

3. The flight assistance system according to claim 1,
wherein the optimization index includes a flight period of time, and
wherein the optimization processing unit optimizes the flight plan so that the flight period of time is minimized.

4. The flight assistance system according to any one of claims 1 to 3,
wherein the optimization index includes a danger level that is a level of danger, and
wherein the optimization processing unit optimizes the flight plan so that the danger level is less than or equal to a threshold level.

5. The flight assistance system according to any one of claims 1 to 4,
wherein the optimization index includes power consumption, a flight period of time, and a danger level that is a level of danger, and
wherein the optimization processing unit changes an optimization priority order of the power consumption, the flight period of time, and the danger level in response to a request of a user.

6. The flight assistance system according to any one of claims 1 to 5, wherein the optimization processing unit decides the flight order pattern on the basis of the optimization index.

7. The flight assistance system according to any one of claims 1 to 6,
wherein the position information is three-dimensional position information of latitude, longitude, and altitude, and
wherein the wind state collection unit generates the wind state information in which the time information, the three-dimensional position information, and the wind states are associated.

8. The flight assistance system according to any one of claims 1 to 7,
wherein the flight route includes two-dimensional position information of latitude and longitude, and
wherein the optimization processing unit changes flight altitude to optimize the flight plan.

9. A flight assistance device comprising:
a flight route storage unit configured to store route information in which departure point information indicating a location of a departure point, arrival point information indicating a location of an arrival point, and a flight route preset when a flying object flies from the location of the departure point to the location of the arrival point are associated; and
an optimization processing unit configured to optimize a flight plan of the flying object on the basis of flight information including the arrival point information, wind state information including future wind states analyzed on the basis of at least one of wind states including a wind direction and a wind speed detected by a wind state detection device and weather information, time information, and position information, and the route information stored in the flight route storage unit,
wherein the optimization processing unit
decides a flight order pattern indicating a flight order for traveling in a circuit to the location of the arrival point corresponding to the flight information on the basis of the wind state information and the route information, and
changes a flight start time of the flight order pattern to optimize the flight plan including the start time and the flight order pattern according to an optimization index based on the flight order pattern, the wind state information, and the route information.

10. A flight assistance method of a flight assistance system including a flight route storage unit configured to store route information in which departure point information indicating a location of a departure point, arrival point information indicating a location of an arrival point, and a flight route preset when a flying object flies from the location of the departure point to the location of the arrival point are associated, the flight assistance method comprising:
collecting, by a wind state collection unit, wind states including a wind direction and a wind speed detected by a wind state detection device, analyzing future wind states on the basis of at least one of the collected wind states and weather information, and generating wind state information including time information, position information, and future wind states corresponding to the position information; and
executing, by an optimization processing unit, an optimization process of optimizing a flight plan of the flying object on the basis of flight information including the arrival point information, the wind state information generated by the wind state collection unit, and the route information stored in the flight route storage unit,
wherein, in the optimization process, the optimization processing unit
decides a flight order pattern indicating a flight order for traveling in a circuit to the location of the arrival point corresponding to the flight information on the basis of the wind state information and the route information, and
changes a flight start time of the flight order pattern to optimize the flight plan including the start time and the flight order pattern according to an optimization index based on the flight order pattern, the wind state information, and the route information.
